# FASCICULE DE BREVET EUROPEEN

(11) **EP 1 928 074 B1**
(45) Date de publication et mention de la délivrance du brevet: **14.09.2011**
(21) Numéro de dépôt: 06405502.3
(22) Date de dépôt: 30.11.2006
(51) Int. Cl.: H02K 5/167, H02K 7/06, H02K 7/08

(54) **Actionneur linéaire de type vis-écrou**
Linearantrieb durch Spindelantrieb
Spindle drive linear actuator

(43) Date de publication de la demande: 04.06.2008
(73) Titulaire: Société Industrielle de Sonceboz S.A., 2605 Sonceboz (CH)
(72) Inventeur: Pfister, Jean-François, 2605 Sonceboz (CH)
(74) Mandataire: Reuteler, Raymond Werner

(56) Documents cités:
- EP-A- 0 743 464
- DE-A1- 4 128 110
- FR-A- 2 155 701
- JP-A- 55 139 048
- US-A- 5 213 000

## Description

La présente invention concerne un actionneur linéaire de type vis-écrou.

Des actionneurs linéaires sont très répandus et utilisés dans beaucoup d'applications différentes.

Dans le domaine de l'automobile, les actionneurs linéaires sont utilisés, entre autre, pour le positionnement de phares, dans les plans horizontaux et verticaux, tels que décrits dans les publications US 6'641'292, US 2005/0046291 et US 2005/0174796. Les dispositifs décrits dans ces publications comportent un moteur pas-à-pas entraînant un système vis-écrou pour le déplacement linéaire d'un arbre solidaire d'une vis. Le moteur pas-à-pas permet de déplacer et positionner l'arbre de la vis rapidement, avec peu de pièces mécaniques et en utilisant une commande relativement simple.

Dans le domaine de l'ajustement des phares automobiles, il est important de disposer d'un système vis-écrou performant, fiable et dynamique, tout en utilisant des composants ayant un faible encombrement, poids et prix de revient. Les composants utilisés dans les automobiles doivent toutefois rester performants même dans des conditions environnementales extrêmes, en particulier pour des plages de températures allant de -40° C à 120° C.

Dans les actionneurs conventionnels, le couple à exercer par le rotor sur l'organe à déplacer diminue lorsque la température baisse, en raison de l'augmentation des forces de frottement dans les paliers disposés entre le rotor et le stator. Ceci est dû à l'augmentation de la viscosité des lubrifiants présents dans les paliers. Bien qu'il existe certains lubrifiants ayant une viscosité acceptable à très basse température, ceux-ci sont soit onéreux, soit inacceptables pour des raisons écologiques.

Un autre désavantage des actionneurs conventionnels précités est qu'il peut y avoir certains jeux qui se manifestent lorsque l'on change de direction de déplacement de l'organe linéaire, ces jeux étant néfastes pour la précision de positionnement des phares, les vibrations et l'usure des composants.

La publication US 2006/0108885 A1 divulgue un moteur destiné à des applications d'électronique grand-public, ce moteur comprenant des paliers à bille. Ce moteur n'est toutefois pas adapté à une application d'actionneur linéaire dans le domaine automobile du fait de l'instabilité des paliers. En effet, les billes sont logées dans des cavités de pièces qui sont assemblées dans le boîtier du moteur, les billes étant en butée contre une surface essentiellement sphérique aux extrémités de l'axe du moteur, mais de façon séparable. En cas de vibration ou de choc, l'interface entre les billes et les extrémités de l'axe peut se séparer et même s'encrasser et s'user, conduisant ainsi non seulement à la possibilité de vibration radiale du rotor, mais également de la décentralisation du rotor. Par ailleurs, la forme du logement dans lequel les billes sont montées, est sensible à l'usure et au positionnement des billes et nécessite des tolérances de fabrication et de montage précises.

Au vu de ce qui précède, un but de l'invention est de réaliser un actionneur linéaire performant, fiable, compact et économe.

Un but spécifique de l'invention est de réaliser un actionneur linéaire performant, fiable et économe sur une large amplitude thermique, et notamment de pouvoir travailler de manière performante à de basses températures.

Il est avantageux de réaliser un dispositif comportant peu de pièces qui peuvent être facilement assemblées afin de réduire les coûts de fabrication et d'assemblage.

Il est avantageux de fournir un actionneur linéaire économe et léger, mais résistant à l'usure.

Des buts de l'invention sont réalisés par un actionneur selon la revendication 1.

Dans la présente invention, un actionneur pour le déplacement linéaire d'un organe à commander comporte un boîtier, un moteur et un système vis-écrou. Le moteur, qui est de préférence un moteur pas-à-pas, comprend un stator comportant des bobines et un rotor comportant des aimants permanents, le rotor étant supporté, à une de ses extrémités, opposée à l'organe à déplacer, par un palier sous forme d'une bille sphérique ou non-sphérique, solidaire ou fixée rigidement au rotor, et insérée dans une cavité essentiellement cylindrique du boîtier, la bille étant en appui axiale essentiellement en un point sur l'axe de rotation, contre une surface dure d'une butée disposée dans la cavité. De préférence, la bille est sous forme d'une bille sphérique conventionnelle telle qu'utilisée dans les roulements à billes, soudée ou collée au rotor. Cela permet de réaliser un palier d'une grande dureté et de précision géométrique, permettant de supporter et de positionner le rotor de façon très précise dans les directions radiale et axiale.

Selon une forme d'exécution préférée de l'invention, une vis du système vis-écrou est solidaire du rotor, l'organe à déplacement linéaire étant muni d'un écrou engageant la vis, la vis étant supportée par un deuxième palier à l'extrémité opposée du palier côté rotor. Le palier à l'extrémité de la vis comprend, de préférence, également une bille sphérique ou non-sphérique, solidaire ou fixée rigidement au rotor, et insérée dans une cavité essentiellement cylindrique du boîtier, la bille étant en appui axiale essentiellement en un point sur l'axe de rotation, contre une surface dure d'une butée disposée dans la cavité. De préférence, la bille du deuxième palier peut également être sous forme d'une bille sphérique conventionnelle telle qu'utilisée dans les roulements à billes, soudée ou collée au rotor. Cela permet de réaliser un palier d'une grande dureté et de précision géométrique, permettant de supporter et de positionner le rotor et la vis de façon très précise dans les directions radiale et axiale.

Un ressort, de préférence un ressort à boudin, est disposé dans une des cavités cylindriques, entre une paroi d'une extrémité de la cavité et la butée qui est mobile et en appui contre la bille, afin d'éliminer le jeu dans le positionnement axial de la vis.

Le faible rayon des billes et leurs faibles surfaces de contact avec les cavités du boîtier et les butées permettent d'avoir un très faible coefficient de frottement, notamment de résistance par un lubrifiant du palier s'opposant au couple moteur. Il est avantageux d'avoir des billes et des butées avec une grande dureté de surface afin de réduire le coefficient de frottement et l'usure. La dureté de surface des billes et des butées est supérieure à 50 Rockwell C, de préférence supérieure à 60 Roclcwell C, par exemple d'environ 65 Rockwell C ou plus.

Le palier cylindrique dans le boîtier, sous forme d'une cavité, est facile à fabriquer avec précision et peut aussi servir à loger et guider un ressort à boudin. Cet arrangement permet également un montage dans une direction axiale (parallèle à l'axe de rotation du rotor) des différents éléments composant l'actionneur (le boîtier, le stator et le rotor) de manière facilement automatisable et avec peu d'opérations.

L'organe à déplacement linéaire peut avantageusement comprendre deux parties séparées ou jointes par une charnière et pouvant être assemblées rapidement et facilement autour de la vis. Dans une variante, l'organe à déplacement linéaire peut même être assemblé sur la vis après l'assemblage du rotor dans le boîtier.

L'organe à déplacement linéaire peut avantageusement être en matière plastique injectée et munie de moyens de fixation tels que des clips élastiques fixant les deux parties automatiquement lorsqu'elles sont assemblées autour de la vis. Ces deux parties comprennent des portions de filetage complémentaires au filetage de la vis afin de former, une fois assemblées, un écrou.

D'autres buts et avantages de l'invention sortiront des revendications, de la description, et des dessins annexés, dans lesquels:
la Fig. 1a est une vue en perspective et en coupe partielle d'un actionneur linéaire selon une forme d'exécution de l'invention;
la Fig. 1b est une vue en coupe de la forme d'exécution selon la Fig. 1a;

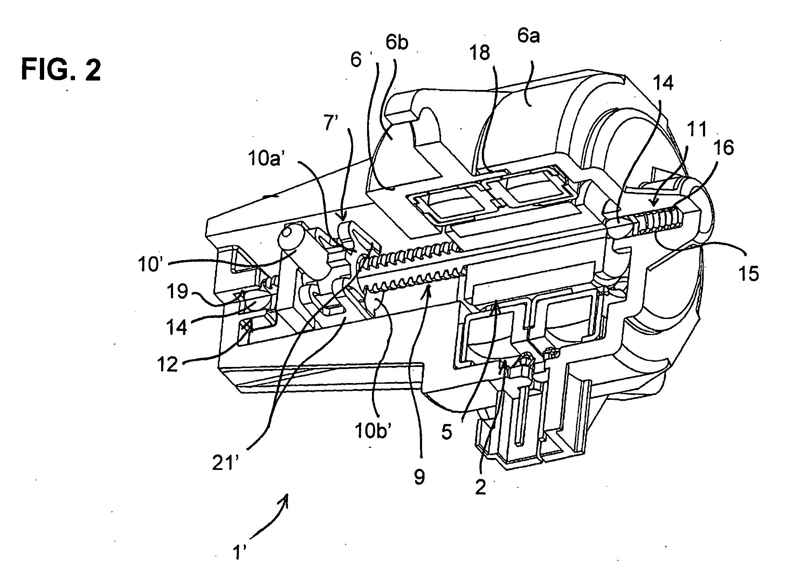

la Fig. 2 est une vue en perspective et en coupe d'un actionneur linéaire selon une deuxième forme d'exécution de l'invention; et
la Fig. 3 est une vue en perspective et en coupe d'une troisième forme d'exécution de l'invention.

Faisant référence aux Figures, un actionneur 1, 1', 1" comprend un moteur 2, de préférence un moteur pas-à-pas, un stator 3 comprenant une ou plusieurs bobines 4, un rotor 5, un boîtier 6 dans lequel le stator et le rotor sont montés, un organe à déplacement linéaire 7, 7', 7" ayant une partie d'écrou 8, 8', 8" filetée montée sur une partie de vis 9, solidaire et s'étendant du rotor 5. L'organe à déplacement linéaire 7, 7', 7" comporte une partie d'accouplement 10, 10' pour sa connexion à un organe à commander, tel que le support amovible d'un phare automobile. L'organe à déplacement linéaire 7, 7', 7" comprend une ou deux surfaces non axisymétriques engageant des surfaces complémentaires du boîtier afin d'empêcher la rotation de l'organe à déplacement linéaire. La mise en rotation du rotor 5 entraîne donc la rotation de la partie de vis 9 et impose un mouvement linéaire axial à l'organe de déplacement linéaire par vissage, respectivement dévissage.

L'utilisation d'un moteur pas-à-pas est avantageuse puisqu'elle permet de facilement et rapidement régler la position de l'organe à commander dans une construction compacte et peu coûteuse. D'autres types de moteurs réversibles peuvent néanmoins être utilisés dans la présente invention.

Le support et le guidage du rotor 5 sont assurés par des paliers 11, 12 disposés à une extrémité du rotor 13a à l'opposé de l'organe à déplacement 7, 7', 7" et à l'extrémité libre 13b de la partie de vis 9. Dans les formes d'exécution illustrées, le palier 11 côté rotor comprend une bille 14 reçue dans une cavité cylindrique 15 formée dans le boîtier 6, qui est fermée d'un côté. Dans la cavité 15 du palier 11, est logé un ressort 16, de préférence un ressort à boudin, appuyant une butée amovible 17 contre la bille 14. Ce ressort sert à rattraper le jeu entre la partie de vis 9 et la partie d'écrou 8. La bille 14 peut avantageusement être une bille conventionnelle telle qu'utilisée dans les roulements à billes, ces billes étant bon marché et ayant une grande dureté de surface et une grande précision géométrique. La bille est de préférence soudée à l'extrémité 13a du rotor 5, mais on pourrait également envisager d'autres moyens de fixation tels que le collage de la bille au rotor.

Il est aussi possible d'usiner les billes intégralement avec le rotor, notamment la vis.

Le faible diamètre de la bille et la faible surface de contact avec la surface cylindrique de la cavité du palier 15 ainsi qu'avec la butée amovible 17 permettent de réduire à un minimum le couple de résistance dû au frottement. En effet, la vitesse tangentielle de la bille au contact de la paroi de la cavité est faible et le point d'application de la force de frottement est très près de l'axe de rotation, respectivement sur l'axe de rotation en ce qui concerne la butée axiale. Le couple de résistance dû au frottement exercé par un lubrifiant visqueux à de basses températures, aura donc un très faible impact sur la performance de l'actionneur. La précision de positionnement radial du moteur est néanmoins très élevée et l'assemblage du rotor très aisé, l'insertion du ressort, du rotor et du stator dans le boîtier pouvant être effectuée dans une direction axiale, c'est-à-dire suivant l'axe de rotation A. A cet effet, le boîtier 6 comprend deux parties, 6a, 6b, avec une interface essentiellement coaxiale 18 disposée autour des bobines 4.

Le palier 12 à l'autre extrémité, c'est-à-dire du côté vis, est de préférence également formé d'une bille 14, de préférence soudée ou collée sur l'extrémité 13b de la vis 9, la bille étant insérée dans une cavité cylindrique 19 formée dans une partie du boîtier. Cette cavité 19 est également fermée d'un côté et munie d'une butée 20 qui est de préférence en un matériau dur, tel qu'un acier, servant à l'appui axial de la bille en opposition de la force linéaire exercée par le ressort 16 et l'organe à déplacement linéaire 7, 7', 7".

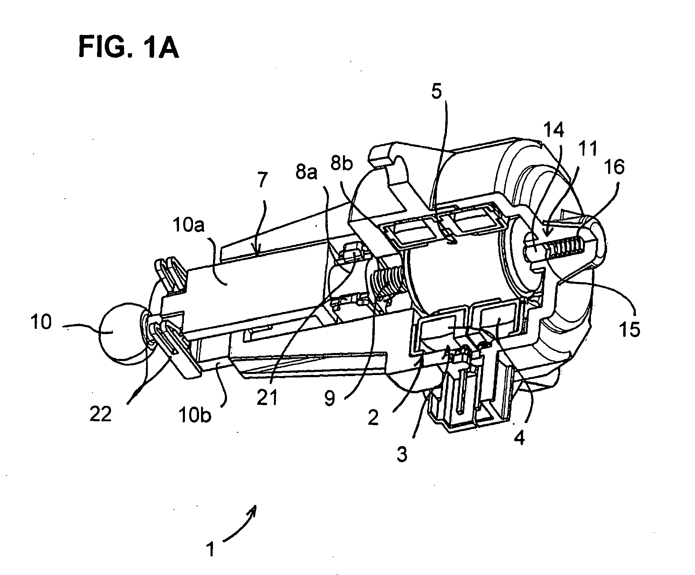

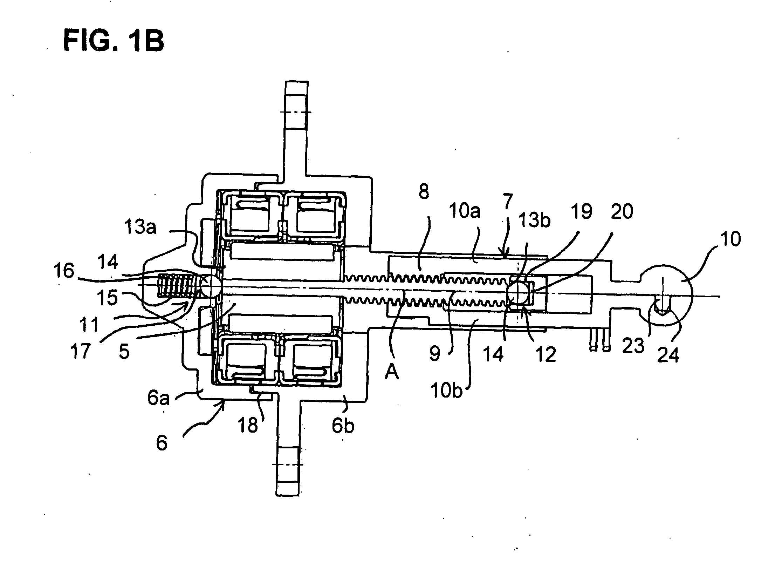

Faisant référence plus particulièrement à la forme d'exécution illustrée dans les Figures 1a, 1b, l'organe à déplacement linéaire 10 est formé de deux parties 10a, 10b, qui sont assemblées de part et d'autre de la vis 9, les deux parties étant fixées rigidement ensemble autour de la vis. Les parties d'écrou 8a, 8b de l'organe à déplacement linéaire 10 ont donc chacune des parties de filetage qui, une fois assemblées, forment un filetage continu, complémentaire au filetage de la vis. Les deux parties de l'organe à déplacement linéaire peuvent être formées en tant que pièces séparées ou d'une pièce avec une charnière. Les deux pièces peuvent être munies de moyens de fixation 21, 22 sous forme de clips élastiques et/ou de chevilles 23 à encastrer dans des trous complémentaires 24, ces moyens étant intégralement formés avec les parties de l'organe 10, de préférence en matière plastique injectée. Ainsi, les deux parties de l'organe à déplacement linéaire peuvent être assemblées autour de la vis de manière très rapide, simple et automatisée, même une fois que le rotor a été assemblé dans le boîtier.

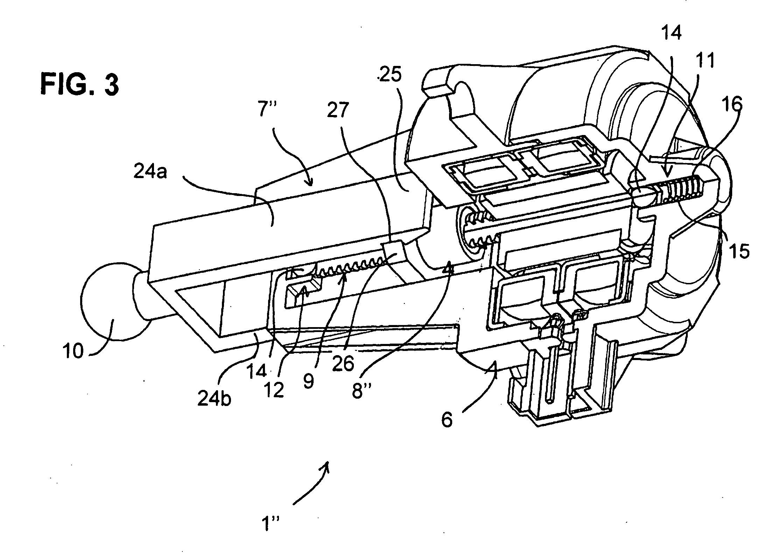

Faisant référence à la Fig. 3, dans une autre variante, l'organe à déplacement linéaire 7" comprend une partie d'écrou 8" et une partie d'accouplement 10 comprenant des bras 24a, 24b qui sont fixées à leurs extrémités libres 25 à une bride 26 de la partie d'écrou 8". Dans l'exemple illustré, les bras 24a, 24b sont élastiques et sont assemblés en les clipsant sur la bride 26 de la partie d'écrou 8" qui est reçue dans une rainure 27 à l'extrémité 25. La partie d'écrou 8" peut ainsi être pré-montée sur la vis 9 et assemblée dans le boîtier 6, la partie d'accouplement 10 étant ensuite fixée après l'assemblage du boîtier sur le rotor.

## Revendications

1. Actionneur linéaire (1) comprenant un boîtier (6), un moteur (2) comprenant un stator avec des bobines (4), un système vis-écrou, et un rotor (5) supporté axialement et radialement côté moteur par un palier (11), le palier comprenant une bille (14) fixée rigidement au rotor, une cavité cylindrique (15) formée ou disposée dans le boîtier dans lequel la bille (14) est insérée, et une butée (17) disposée dans la cavité, en appui dans une direction axiale du rotor, contre la bille (14) en essentiellement un point.

2. Actionneur selon la revendication 1, **caractérisé en ce que** la bille (14) est sphérique.

3. Actionneur selon la revendication 1 ou 2, **caractérisé en ce que** la bille (14) est soudée au rotor (5).

4. Actionneur selon la revendication 1, 2 ou 3, **caractérisé en ce qu'**il comprend un deuxième palier (12) comprenant une bille (14) solidaire ou fixée à une extrémité (13b) d'une partie de vis (9) du système vis-écrou, une cavité cylindrique (19) du boîtier dans laquelle la bille est insérée, et une butée, en appui dans une direction axiale du rotor, contre la bille en essentiellement un point.

5. Actionneur selon l'une des revendications précédentes, **caractérisé en ce qu'**un ressort (16) est logé dans la cavité (15) d'un des paliers (11, 12) et exerce une force axiale contre la bille (14) correspondante afin d'éliminer du jeu dans le positionnement axiale de la vis.

6. Actionneur selon l'une des revendications précédentes, **caractérisé en ce que** chaque butée est sous forme d'un insert en matériau dur (17, 20).

7. Actionneur selon l'une des revendications précédentes, **caractérisé en ce que** l'actionneur comprend un organe à déplacement linéaire (7, 7', 7") ayant une partie d'écrou (8, 8', 8") filetée monté sur une partie de vis (9), solidaire et s'étendant du rotor, l'organe à déplacement linéaire comprenant une partie d'accouplement (10, 10') pour sa connexion à un organe à commander.

8. Actionneur selon la revendication 7, **caractérisé en ce que** l'organe à déplacement linéaire (7, 7') comprend au moins deux parties (10a, 10b, 10a', 10b') assemblées de part et d'autre de la partie de vis (9) du système vis-écrou.

9. Actionneur selon la revendication précédente, **caractérisé en ce que** les deux parties de l'organe à déplacement linéaire sont fabriquées en un matériau plastique injecté et sont munis de moyens de fixation sous forme de bras élastiques ou de chevilles et trous complémentaires se clipsant ou se fixant automatiquement lorsque les deux parties sont rapprochées l'une à l'autre autour de la partie de vis (9).

10. Actionneur selon l'une des revendications précédentes, **caractérisé en ce que** le boîtier (6) comprend deux parties (6a, 6b) assemblées dans une direction axiale autour du stator et du rotor et ayant une interface (18) coaxiale autour de la partie moteur.

## Claims

1. A linear actuator (1) comprising a housing (6), a motor (2) comprising a stator with coils (4), a screw-nut system, and a rotor (5) axially and radially supported on a motor side by a bearing (11), the bearing comprising a ball (14) rigidly attached to the rotor, a cylindrical cavity (1 5) formed or positioned in the housing into which the ball (14) is inserted, and a stop (1 7) positioned in the cavity in abutment at essentially one point against the ball (14) in an axial direction of the rotor.

2. Actuator according to claim 1 , **characterized in that** the ball (14) is spherical.

3. Actuator according to claim 1 or 2, **characterized in that** the ball (14) is welded to the rotor (5).

4. Actuator according to claim 1, 2 or 3, **characterized in that** it comprises a second bearing (1 2) comprising a ball (14) integral with or attached to an end (1 3b) of a screw portion (9) of the screw-nut system, a cylindrical cavity (19) of the housing into which the ball is inserted, and a stop in abutment at essentially one point against the ball in an axial direction of the rotor.

5. Actuator according to one of the preceding claims, **characterized in that** a spring (1 6) is received in the cavity (1 5) of one of said bearings (11, 12) and exerts an axial force against the corresponding ball (14) in order to suppress axial play of the screw.

6. Actuator according to one of the preceding claims, **characterized in that** each stop is in the form of an insert in a hard material (1 7, 20).

7. Actuator according to one of the preceding claims, **characterized in that** the actuator comprises a linear displacement unit (7, 7', 7") having a threaded nut portion (8, 8', 8") mounted on a screw portion (9) integral with and extending from the rotor, the linear displacement unit comprising a coupling portion (10, 10') for connection to an organ to be controlled.

8. Actuator according to claim 7, **characterized in that** the linear displacement unit (7, 7') comprises at least two portions (10a, 10b, 10a', 10b") assembled on either side of the screw portion (9) of the screw-nut system.

9. Actuator according to the preceding claim, **characterized in that** the two portions of the linear displacement unit are made of an injected plastic material and are provided with attachment means in the form of elastic arms or pins and complementary holes which are fastened with clips or attached automatically when both portions are brought closer to each other around the screw portion (9).

10. Actuator according to one of the preceding claims, **characterized in that** the housing (6) comprises two portions (6a, 6b) assembled in an axial direction around the stator and rotor and having a coaxial interface (18) around the motor portion.

## Patentansprüche

1. Linearer Aktuator (1), der ein Gehäuse (6), einen Motor (2), der einen Stator mit Spulen (4) umfasst, ein Schraube-Mutter-System und einen motorseitig axial und radial von einem Lager (11) gehaltenen Rotor (5) umfasst, wobei das Lager eine fest am Rotor befestigte Kugel (14), einen in dem Gehäuse, in den die Kugel (14) eingesetzt ist, ausgebildeten oder angeordneten zylindrischen Hohlraum (15) und einen in dem Hohlraum in Abstützung in eine axiale Richtung des Rotors gegen die Kugel (14) in im Wesentlichen einem Punkt angeordneten Anschlag (17) umfasst.

2. Aktuator nach Anspruch 1, **dadurch gekennzeichnet, dass** die Kugel (14) sphärisch ist.

3. Aktuator nach Anspruch 1 oder 2, **dadurch gekennzeichnet, dass** die Kugel (14) mit dem Rotor (5) verschweißt ist.

4. Aktuator nach Anspruch 1, 2 oder 3, **dadurch gekennzeichnet, dass** er ein zweites Lager (12), das eine mit einem Ende (13b) eines Schraubenabschnitts (9) des Schraube-Mutter-Systems verbundene oder befestigte Kugel (14), einen zylindrischen Hohlraum (19) des Gehäuses, in den die Kugel eingesetzt ist und einen Anschlag in Abstützung in eine axiale Richtung des Rotors gegen die Kugel in im Wesentlichen einem Punkt umfasst.

5. Aktuator nach einem der vorangehenden Ansprüche, **dadurch gekennzeichnet, dass** in dem Hohlraum (15) einer der Lager (11, 12) eine Feder (16) untergebracht ist und eine axiale Kraft gegen die entsprechende Kugel (14) ausübt, um ein Spiel bei der axialen Positionierung der Schraube zu beseitigen.

6. Aktuator nach einem der vorangehenden Ansprüche, **dadurch gekennzeichnet, dass** jeder Anschlag in Form eines Einsatzes aus hartem Werkstoff (17, 20) ist.

7. Aktuator nach einem der vorangehenden Ansprüche, **dadurch gekennzeichnet, dass** der Aktuator ein verbundenes und sich vom Rotor erstreckendes Linearverschiebungsorgan (7, 7', 7") mit einem Mutterabschnitt (8, 8', 8") mit Gewinde umfasst, der auf einem Schraubenabschnitt (9) montiert ist, wobei das Linearverschiebungsorgan einen Kopplungsabschnitt (10, 10') für seine Verbindung mit einem zu steuernden Organ umfasst.

8. Aktuator nach Anspruch 7, **dadurch gekennzeichnet, dass** das Linearverschiebungsorgan (7, 7') mindestens zwei Abschnitte (10a, 10b, 10a', 10b') umfasst, die auf der einen und anderen Seite des Schraubenabschnitts (9) des Schraube-Mutter-Systems verbunden sind.

9. Aktuator nach vorangehendem Anspruch, **dadurch gekennzeichnet, dass** die zwei Abschnitte des Linearverschiebungsorgans aus einem Spritzgusskunststoff hergestellt und mit Befestigungsmitteln in Form elastischer Arme oder Stifte und komplementären Öffnungen ausgestattet sind, die automatisch rasten oder sich fixieren, wenn die zwei Abschnitte zueinander um den Schraubenabschnitt (9) angenähert sind.

10. Aktuator nach einem der vorangehenden Ansprüche, **dadurch gekennzeichnet, dass** das Gehäuse (6) zwei in eine axiale Richtung um den Stator und den Rotor verbundene Abschnitte (6a, 6b) umfasst, die eine koaxiale Schnittstelle (18) um den Motorabschnitt haben.
